(19)

Europäisches Patentamt

European Patent Office

Office européen des brevets

(11) **EP 4 597 631 A2**

(12) **EUROPEAN PATENT APPLICATION**

(43) Date of publication:
**06.08.2025 Bulletin 2025/32**

(21) Application number: **25184758.8**

(22) Date of filing: **25.10.2022**

(51) International Patent Classification (IPC):
***H01M 4/587*** *(2010.01)*

(52) Cooperative Patent Classification (CPC):
**H01M 4/133; H01M 4/1393; H01M 4/587;**
H01M 10/0525; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.10.2021 EP 21204839**

(62) Document number(s) of the earlier application(s) in
accordance with Art. 76 EPC:
**22812472.3 / 4 423 822**

(71) Applicant: **CarbonX IP 9 B.V.**
**1096 HA Amsterdam (NL)**

(72) Inventors:
• **van Raalten, Rutger Alexander David**
**1096 Amsterdam (NL)**

• **Sordi, Daniela**
**1096 HA Amsterdam (NL)**
• **ten Dam, Jeroen**
**1096 HA Amsterdam (NL)**

(74) Representative: **Nederlandsch Octrooibureau**
**P.O. Box 29720**
**2502 LS The Hague (NL)**

Remarks:
This application was filed on 24.06.2025 as a
divisional application to the application mentioned
under INID code 62.

(54) **NEW ANODE MATERIAL IN LITHIUM AND SODIUM BATTERIES**

(57)     The invention pertains to the use of porous, chemically interconnected, carbon nanofibres-comprising carbon networks as electrochemically active material in the anode of lithium or sodium batteries. It has been found that said carbon nanofibres-comprising carbon networks can beneficially be used in the anode of lithium or sodium batteries when added in an amount of 10 - 100 wt%. The benefits include a high capacity, high lifetime (stability over extended cycling), high charge and discharge rate and being resilient during manufacture and use. The porous, chemically interconnected, carbon nanofibres-comprising carbon networks can be used in the anode of lithium or sodium batteries of many areas of technology, such as smartphones, laptops and electric and hybrid vehicles.

EP 4 597 631 A2

**Description**

FIELD OF THE INVENTION

The present invention is in the field of lithium and sodium batteries. More particularly, the present invention relates to improved anodes in rechargeable lithium and sodium batteries. The invention preferably relates to sodium-ion and lithium-ion batteries, most preferably lithium-ion batteries.

BACKGROUND TO THE INVENTION

Although there are different kinds of batteries available, nowadays lithium is the first choice for negative electrode material. The reason lies in the specific capacity for lithium which is much higher than that of for example zinc and lead. It is the lightest, most electropositive metal with high energy and power density. The demand for lithium batteries or 'lithium secondary batteries' keeps increasing, especially as power sources for portable electronic devices such as smartphones or laptops (including their liquid crystal display (LCD) or organic light emitting diodes (OLED)), power plant energy storage (i.e. from surplus wind and solar renewable energy), Uninterruptible Power Supply (UPS) and as power sources for driving motors of electric and hybrid vehicles.

Although lithium batteries are the most widely used power batteries, the production of lithium batteries faces great challenges, such as an increasing shortage of lithium resources, the rising price of upstream materials and a low recycling rate. In order to overcome these challenges of lithium batteries, sodium batteries, making use of an intercalation process of sodium ions between a positive electrode and a negative electrode, make a solid alternative choice. The advantages of sodium batteries are that the reserve of sodium resources is far more abundant than that of lithium, the distribution is more extensive, and the cost of sodium is far lower than that of lithium; for these reasons, sodium batteries have the potential to replace lithium batteries, insofar as issues such as their low coulombic efficiency and poor rate capability are overcome or reduced to satisfactory proportions.

Lithium and sodium batteries are typically composed of four major components: cathode, anode, separator and electrolyte. The electrolyte serves as a conductive medium through which lithium ions can be transported to and from the electrodes. The electrolyte can be either solid-state or liquid. In the context of the invention, a 'lithium battery' or 'sodium battery' includes both solid state (with solid electrolyte) and liquid state (with liquid electrolyte) batteries. In the context of the invention, the terms 'lithium-ion battery' and 'sodium-ion battery' are reserved for battery technology with a liquid electrolyte.

The cathode of lithium batteries generally comprises a Lithium-Metal-Oxide (e.g. lithium cobalt oxide ($LiCoO_2$)). The materials commonly used as active materials in the anode of lithium batteries are intercalation compounds, metal alloys and conversion compounds (transition-metal oxides).

The most common of the intercalation compounds used in the anode of a lithium battery is graphite. Another common compound used in the anode of lithium batteries is silicon or silicon-based compounds. Generally silicon materials have high specific capacity compared to graphite. All in all, hitherto graphite remains the dominant intercalation anode material in commercial lithium batteries; this is because the performance of graphite is safe and provides sufficient energy density for many portable power applications, as well as low working potential, low cost and good cycle life. However, a battery with a graphite anode usually has moderate power density due to the relatively slow diffusion rate of lithium ion into carbon materials (between $10^{-12}$ and $10^{-6}$ cm$^2$/s); this feature, together with a suboptimal electron conductivity, results in charge/discharge rates of graphite alone being not optimal, and thus in long charging and discharging times of the battery.

To improve the charge/discharge rates of the battery, conductive additives are traditionally added to anode active materials to improve the electron conductivity of the anode (Roselin et al., "Recent Advances and Perspectives of Carbon-Based Nanostructures as Anode Materials for Li-ion Batteries". Materials 2019, 12, 1229). These additives construct a conductive percolation network to increase and keep the electronic conductivity of electrode, enabling it charge and discharge faster. In addition, conductive additives absorb and retain electrolyte, allowing an intimate contact between the lithium or sodium ions and active materials. The conductive additive for lithium and sodium batteries is commonly a carbon nanomaterial selected from conductive carbon black, Super P, acetylene black, carbon nanofibers, and carbon nanotubes, all presenting low weight, high chemical inertia and high specific surface area (Zhang Q et al., "Carbon nanomaterials used as conductive additives in lithium ion batteries", Recent Pat Nanotechnol. 2010 Jun;4(2):100-10).

Conductive carbon black has been used as a conductive additive to the electrochemically active material in the anode or cathode, to improve the electron conductivity and thus the charge and discharge rates of the batteries. However, in few instances carbon black has been tested as the active material in the anode. For instance, WO1998/038685 discloses a rechargeable battery with an anode comprising thermal carbon black of average particle size greater than 100 nm, in particular 85-95% thermal carbon black, about 0-10% conductive black and about 5% binder. Nevertheless, thermal carbon black presents a low crystallinity, which derives into a lower electrical conductivity, and higher brittleness and a broad particle size distribution of its globular particles, which results in non-homogenous properties between batches. Therefore, thermal carbon black is not suitable for either manufacturing or day-to-day use physical stability in lithium or sodium batteries. Hence, carbon black has not found any commercial application in lithium or sodium batteries other than in the form of a conductive additive.

US 2021/184206 and KR 101 162 588 disclose carbon nanotubes as additive in anode materials. However, the specific capacity and charge and discharge rate were found to be still relatively low.

Sodium batteries present their very own challenges. For instance, since a sodium ion (1.02 Å) is 55% larger than lithium ion (0.69 Å), it is more difficult to accommodate sodium ions in anodes reversibly. In fact, graphite materials commercially used as anodes in lithium batteries could not achieve acceptable performances on sodium batteries, because graphite anodes that have been used up to now in sodium batteries absorb too little sodium, which results in sodium batteries being less powerful because they inevitably lose energy storage density due to a lower cell voltage. Alternative anode materials such as red phosphorus (P) have been used to overcome the limitations of graphite as an anode material. However, (1) pristine red P has a very low electrical conductivity (~10-14 S cm-1); (2) the large volume expansion during sodiation/desodiation may cause severe capacity decay (Wang et al, "Influence of Conductive additives on the stability of red phosphorus-carbon anodes for sodium-ion batteries". Scientific Reports 2019. 9:946), Thus, there is also a need to find alternative anode materials in sodium batteries.

Either for sodium or for lithium batteries, there remains a need in the art to find alternative anode materials with high-capacity and high lithium or sodium ions diffusion rate that could help to improve the energy and power densities of the cell. More specifically, there is a need to further develop the properties of the active material in the anodes to obtain lithium or sodium batteries with high capacity and long lifetime with fast charge/discharge rates and physical properties that enable a safe manufacturing and use.

SUMMARY TO THE INVENTION

The inventors have found that carbon nanofibres-comprising carbon networks can be beneficially used as an active anode material in lithium or sodium batteries instead of currently used active anode materials, to the extent that the above goals in the art can be fulfilled; in particular, a high capacity, high lifetime (stability over extended cycling), high charge and discharge rate, all while having physical properties that enable a safe manufacturing and use.

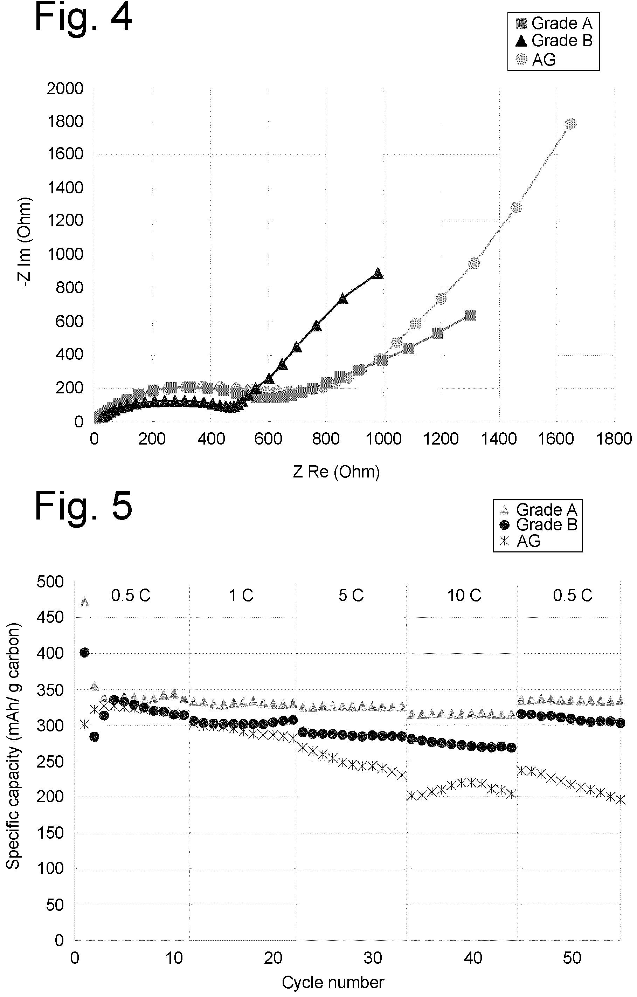

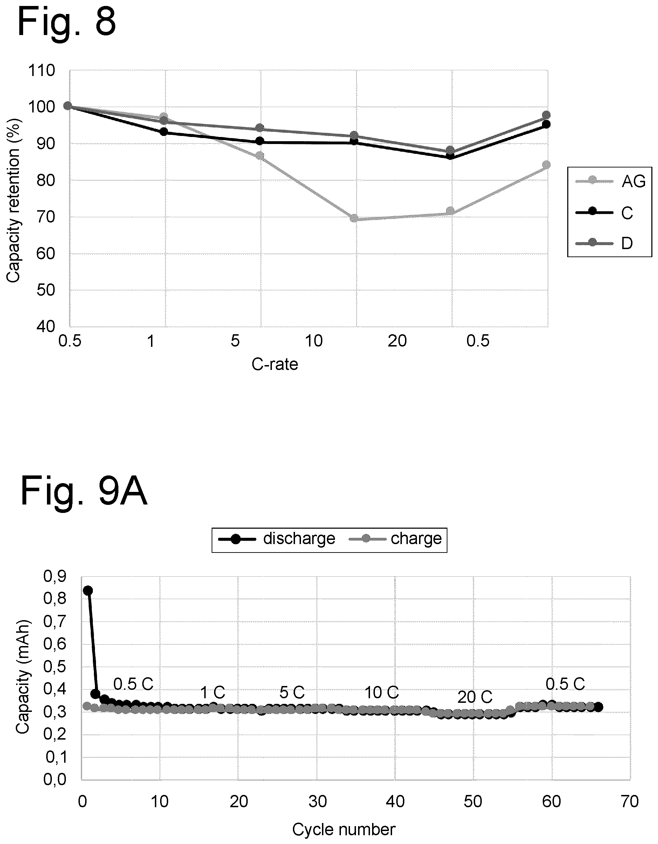

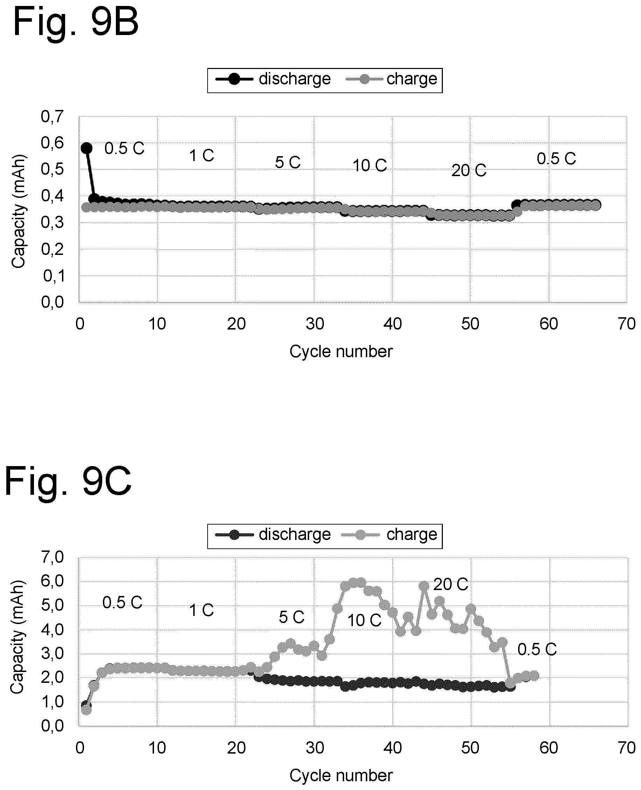

Advantageously, the inventors found that the anodes comprising the carbon nanofibres-comprising carbon networks according to the invention as an active anode material can contribute to lithium or sodium battery capacity through a different intercalation of lithium or sodium ions. Lifetime (stability over extended cycling) can be improved by improving electron conductivity; reference is made to Table 4 herein. Because the electron conductivity of the carbon nanofibres-comprising carbon networks according to the invention is high (for instance compared to that of graphite), the reversibility of the charge/discharge process is enhanced when using the carbon nanofibres-comprising carbon networks according to the invention as anode material. Crucially, the inventors also found that the charge and discharge rates can be improved by the carbon nanofibres-comprising carbon networks according to the invention; reference is made to Figure 5, Figure 7 and Figure 8 herein. The inventors have also found that Coulombic efficiency was improved by the carbon nanofibres-comprising carbon networks according to the invention; reference is made to Figure 9 herein.

Without wishing to be tied down to any theory, the inventors believe that these advantageous properties could be attributed to the networks' inherent electron conductivity and open pore structure due to their crystallinity, accessible porosity, filaments length-to-diameter ratio and their d-spacing, which facilitates the diffusion of lithium or sodium ions. Moreover, the graphitic crystallites in the carbon nanofibres-comprising carbon networks according to the invention are arranged in nanosized filaments, which greatly reduces the diffusion path length of lithium or sodium ions during intercalation, as the distance for lithium or sodium ions to move from the outside to the center of the carbon material is shorter. Overall, these improved features result in an improved conductivity route.

The mechanism that the authors hypothesize to explain this advantageous effect is that the carbon nanofibres-comprising carbon networks according to the invention represents a micron-sized nanostructured material comprising filaments which are highly conductive and 50 nm thick, while other anode materials such as graphite present particle dimensions in the $\mu$m scale. These nanofilaments facilitate the conveyance of electrons and the intercalation of lithium or sodium ions so their diffusion time is reduced.

In addition, the inventors found that, while the use of the carbon nanofibres-comprising carbon networks according to the invention as anode material in a battery presents high capacity and long lifetime values comparable to those of common active anode materials such as graphite. This allows for high charge / discharge rates, thus providing for batteries with a reduced charging time. In particular, it allows the manufacturing of batteries charging in minutes (i.e. 6 minutes) instead of hours.

In a preferred embodiment, these porous carbon networks form an intraparticle porous network wherein the carbon nanofibers are interconnected to other carbon nanofibers in the network by chemical bonds via junctions, wherein the pores in the network have an intraparticle pore diameter size of 5-150 nm using Mercury Intrusion Porosimetry according to ASTM D4404-10, and the carbon nanofibers have an average aspect ratio of fibre length-to-thickness of at least 2, preferably having a d-spacing of 0.340-0.5 nm, more preferably of 0.35-0.45 nm, even more preferably of 0.355-0.375 nm. Crucially, this d-spacing is higher than that of other anode active materials such as graphite (0.335 nm), which facilitates the intercalation of lithium or sodium ions. Because of their higher volume, this higher d-spacing is particularly beneficial to the intercalation of sodium ions in sodium batteries.

The invention thus pertains to the use of carbon nanofibres-comprising carbon networks as active components in the anode of lithium or sodium batteries, to the anode comprising these carbon nanofibres-comprising carbon networks and to the lithium or sodium batteries comprising these anodes. While the invention in broadest sense also relates to solid state lithium and sodium batteries, the invention preferably relates to lithium-ion and sodium-ion batteries, more preferably lithium-ion batteries

LIST OF EMBODIMENTS

1. Use of porous, chemically interconnected, carbon nanofibres-comprising carbon networks as electrochemically active material in the anode of rechargeable lithium or sodium batteries.

2. Use according to embodiment 1, wherein said carbon nanofibres-comprising carbon networks represents 10 - 100 wt%, preferably more than 10 and less than 100 wt%, of the total mass of the anode.

3. Use according to embodiment 1 or 2, wherein the carbon network comprises crystalline carbon-nanofibres.

4. Use according to any one of the preceding embodiments, wherein the average fibre length of the carbon-nanofibres is 30 - 10,000 nm.

5. Use according to any one of the preceding embodiments, wherein the porous carbon networks form an intraparticle porous network wherein the carbon nanofibers are interconnected to other carbon nanofibers in the network by chemical bonds via junctions, wherein the pores in the network have an intraparticle pore diameter size of 5-150 nm using Mercury Intrusion Porosimetry according to ASTM D4404-10, and the carbon nanofibers have an average aspect ratio of fibre length-to-thickness of at least 2, preferably having a d-spacing in the range of 0.340 to 0.5 nm.

6. Use according to any one of the preceding embodiments, wherein the lithium or sodium batteries are suited for and comprised in smartphones, laptops, digital cameras and camcorders, medical and communication systems, as Uninterruptible Power Supply (UPS), as power plant energy storage and electric and/or hybrid vehicles.

7. A lithium or sodium battery anode comprising porous, chemically interconnected, carbon nanofibres- comprising carbon networks as electrochemically active material.

8. A lithium or sodium battery anode comprising porous, chemically interconnected, carbon nanofibres- comprising carbon networks representing 10 - 100 wt%, preferably more than 10 and less than 100 wt%, of the total mass of the anode.

9. The lithium or sodium battery anode according to embodiment 7 or 8, wherein the porous carbon networks form an intraparticle porous network wherein the carbon nanofibers are interconnected to other carbon nanofibers in the network by chemical bonds via junctions, wherein the pores in the network have an intraparticle pore diameter size of 5-150 nm using Mercury Intrusion Porosimetry according to ASTM D4404-10, and the carbon nanofibers have an average aspect ratio of fibre length-to-thickness of at least 2, preferably having a d-spacing of 0.340 to 0.5 nm.

10. The battery anode according to embodiment 8 or 9, wherein the battery is a lithium battery, wherein the anode contains 0.1 - 90 wt.% of an additional active material, wherein the additional active material is graphite, silicon, a silicon-based compound $(SiO_2)$, or a combination thereof.

11. The battery anode according to embodiment 10, wherein the additional active material is silicon, a silicon-based compound $(SiO_2)$, or a combination thereof, wherein silicon, the silicon-based compound $(SiO_2)$, or combination thereof are mixed with the carbon nanofibres-comprising carbon networks in the anode or the carbon nanofibres-comprising carbon networks are coated with silicon, the silicon-based compound $(SiO_2)$, or combination thereof.

12. A rechargeable lithium or sodium battery comprising the anode according to any one of embodiments 7 - 11.

13. The lithium or sodium battery according to embodiment 12, wherein said battery is comprised in and suited for smartphones, laptops, digital cameras and camcorders, medical and communication systems, as Uninterruptible Power Supply (UPS), as power plant energy storage and electric and/or hybrid vehicles.

14. Use according to any one of embodiments 1 - 6, the lithium or sodium battery anode according to any one of embodiments 7 - 11 or the lithium or sodium battery according to embodiment 12 or 13, wherein the carbon networks are obtainable by a process for producing crystalline carbon networks in a reactor **3** which contains a reaction zone **3b** and a termination zone **3c,** by injecting a micro-emulsion of the water-in-oil, oil-in-water or bicontinuous type **c,** comprising metal catalyst nanoparticles, into the reaction zone **3b** which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks **e,** transferring these networks **e** to the termination zone **3c,** and quenching or stopping the formation of crystalline carbon networks in the termination zone by spraying in water **d.**

15. A battery-powered device comprising the lithium or sodium battery anode according to any one of embodiments 7 - 11 or the lithium or sodium battery according to embodiment 12 or 13.

16. The device according to embodiment 15, which is a smartphone, a laptop, a power plant energy storage device or an electric or hybrid vehicle.

17. A lithium or sodium battery anode comprising porous, chemically interconnected, carbon nanofibres- comprising carbon networks as electrochemically active material representing 10 - 100 wt%, preferably more than 10 and less than 100 wt%, of the total mass of the anode.

BRIEF DESCRIPTION OF THE DRAWINGS

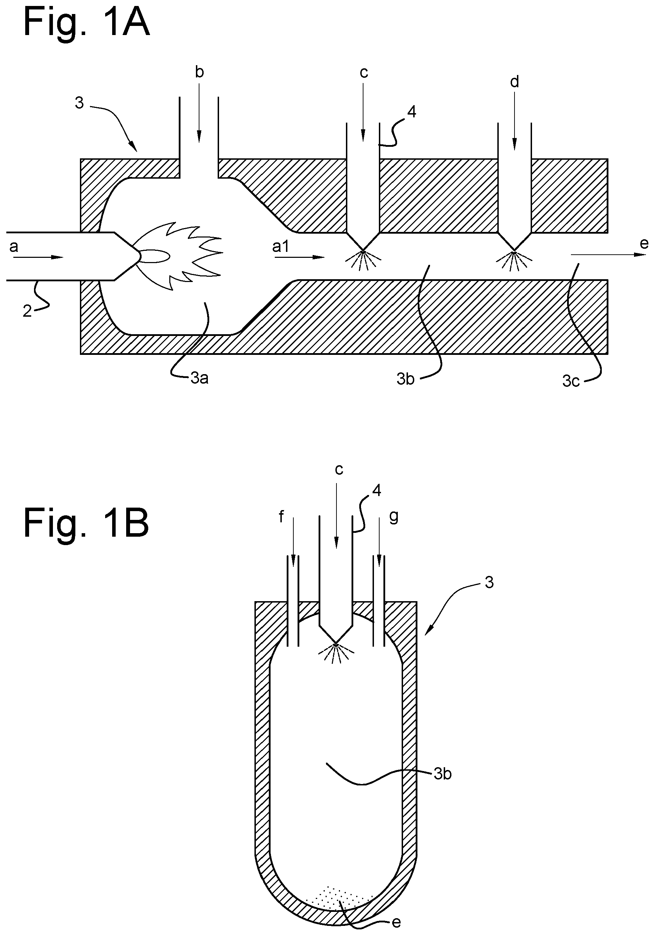

Fig. 1A is a schematic diagram of a continuous furnace carbon black producing process in accordance with the present invention which contains, along the axis of the reactor **3,** a combustion zone **3a,** a reaction zone **3b** and a termination zone **3c,** by producing a stream of hot waste gas **a1** in the combustion zone by burning a fuel **a** in an oxygen-containing gas **b** and passing the waste gas **a1** from the combustion zone **3a** into the reaction zone **3b,** spraying (atomizing) a single-phase emulsion **c** in the reaction zone **3b** containing the hot waste gas, carbonizing said emulsion at increased temperature, and quenching or stopping the reaction in the termination zone **3c** by spraying in water **d,** to obtain crystalline carbon networks **e** according to the invention;

Fig. 1B is a schematic diagram of a semi-batch carbon black producing process where a single-phase emulsion **c** is atomized through a nozzle **4** at the top of the reactor **3** into the reactor zone **3b** at elevated temperatures, carbonizing said emulsion at the elevated temperature in the reactor zone **3b,** and collecting the crystalline carbon networks **e** at the bottom of the reactor. Additionally two gas-inlets are present that enter the reactor from the top, for adding inert gas **f,** preferably nitrogen for controlling and/or depletion of oxygen-levels, and for introducing a carbon-containing gas **g** into the reactor, preferably acetylene or ethylene.

Fig. 2 depicts a schematic side sectional view of a lithium or sodium battery according to the invention, hereby exemplified as a lithium-ion or sodium-ion battery including an anode **5** comprising carbon nanofibres-comprising carbon networks in accordance with an embodiment of the present invention. The lithium-ion or sodium-ion battery also comprises a cathode **6,** a separator **7** between the anode and the cathode and an electrolyte **8.** The release of electrons (oxidation) and of lithium or sodium ions from the anode towards the cathode takes place during the discharge cycle.

Fig. 3: Specific capacity of lithium-ion battery anodes comprising carbon nanofibres-comprising carbon networks according to the invention

Fig. 4: Nyquist plots of Artificial Graphite, Grade A, and Grade B.

Fig. 5: Cyclability at different C-rates of lithium-ion battery anodes comprising carbon nanofibres-comprising carbon networks according to the invention. Capacity vs cycle and series of cycles at different C-rate.

Fig. 6: Specific capacity of lithium-ion battery anodes comprising carbon nanofibres-comprising carbon networks according to the invention.

Fig. 7: Cyclability at different C-rates of lithium-ion battery anodes comprising carbon nanofibres-comprising carbon networks according to the invention. Capacity vs cycle and series of cycles at different C-rate.

Fig. 8: Capacity retention over cycling as the C-rate increases, as shown in the rate capability test.

Fig. 9: Coulombic efficiency as discharge with corresponding charge at different cycle number. In a half-cell, Coulombic efficiency % is calculated as follows: (charge/discharge)*100.

EMBODIMENTS OF THE INVENTION

1. Use of porous, chemically interconnected, carbon nanofibres-comprising carbon networks as electrochemically active material in the anode of rechargeable lithium or sodium batteries.

2. Use according to embodiment 1, wherein said carbon nanofibres-comprising carbon networks represents 10 - 100 wt%, preferably more than 10 and less than 100 wt%, of the total mass of the anode.

3. Use according to embodiment 1 or 2, wherein the carbon network comprises crystalline carbon-nanofibres.

4. Use according to any one of the preceding embodiments, wherein the average fibre length of the carbon-nanofibres is 30 - 10,000 nm.

5. Use according to any one of the preceding embodiments, wherein the porous carbon networks form an intraparticle porous network wherein the carbon nanofibers are interconnected to other carbon nanofibers in the network by chemical bonds via junctions, wherein the pores in the network have an intraparticle pore diameter size of 5-150 nm using Mercury Intrusion Porosimetry according to ASTM D4404-10, and the carbon nanofibers have an average aspect ratio of fibre length-to-thickness of at least 2, preferably having a d-spacing in the range of 0.340 to 0.5 nm.

6. Use according to any one of the preceding embodiments, wherein the lithium or sodium batteries are suited for and comprised in smartphones, laptops, digital cameras and camcorders, medical and communication systems, as Uninterruptible Power Supply (UPS), as power plant energy storage and electric and/or hybrid vehicles.

7. A lithium or sodium battery anode comprising porous, chemically interconnected, carbon nanofibres-comprising carbon networks as electrochemically active material.

8. A lithium or sodium battery anode comprising porous, chemically interconnected, carbon nanofibres-comprising carbon networks representing 10 - 100 wt%, preferably more than 10 and less than 100 wt%, of the total mass of the anode.

9. The lithium or sodium battery anode according to embodiment 7 or 8, wherein the porous carbon networks form an intraparticle porous network wherein the carbon nanofibers are interconnected to other carbon nanofibers in the network by chemical bonds via junctions, wherein the pores in the network have an intraparticle pore diameter size of 5-150 nm using Mercury Intrusion Porosimetry according to ASTM D4404-10, and the carbon nanofibers have an average aspect ratio of fibre length-to-thickness of at least 2, preferably having a d-spacing of 0.340 to 0.5 nm.

10. A rechargeable lithium or sodium battery comprising the anode according to any one of embodiments 7 - 9.

11. The lithium or sodium battery according to embodiment 10, wherein said battery is comprised in and suited for smartphones, laptops, digital cameras and camcorders, medical and communication systems, as Uninterruptible Power Supply (UPS), as power plant energy storage and electric and/or hybrid vehicles.

12. Use according to any one of embodiments 1 - 6, the lithium or sodium battery anode according to any one of embodiments 7 - 9 or the lithium or sodium battery according to embodiment 10 or 11, wherein the carbon networks are obtainable by a process for producing crystalline carbon networks in a reactor **3** which contains a reaction zone **3b** and a termination zone **3c,** by injecting a micro-emulsion of the water-in-oil, oil-in-water or bicontinuous type **c,** comprising metal catalyst nanoparticles, into the reaction zone **3b** which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks **e,** transferring these networks e to the termination zone **3c,** and quenching or stopping the formation of crystalline carbon networks in the termination zone by spraying in water **d.**

13. A battery-powered device comprising the lithium or sodium battery anode according to any one of embodiments 7 - 9 or the lithium or sodium battery according to embodiment 10 or 11.

14. The device according to embodiment 13, which is a smartphone, a laptop, a power plant energy storage device or an electric or hybrid vehicle.

15. A lithium or sodium battery anode comprising porous, chemically interconnected, carbon nanofibres-comprising carbon networks as electrochemically active material representing 10 - 100 wt%, preferably more than 10 and less than 100 wt%, of the total mass of the anode.

16. The battery anode according to embodiments 8 or 9, wherein the battery is a lithium battery, wherein the anode contains 0.1 - 90 wt.% of an additional active material, wherein the additional active material is graphite, silicon, a silicon-based compound ($SiO_2$), or a combination thereof.

17. The battery anode according to embodiment 16, wherein the additional active material is silicon, a silicon-based compound ($SiO_2$), or a combination thereof, wherein silicon, the silicon-based compound ($SiO_2$), or combination thereof are mixed with the carbon nanofibres-comprising carbon networks in the anode or the carbon nanofibres-comprising carbon networks are coated with silicon, the silicon-based compound ($SiO_2$), or combination thereof.

## DETAILED DESCRIPTION

The following is copied from Roselin (Roselin et al., "Recent Advances and Perspectives of Carbon-Based Nanostructures as Anode Materials for Li-ion Batteries". Materials 2019, 12, 1229), explaining the working principles of batteries, exemplified by a lithium-ion (Li-ion) battery, the content of which is herewith incorporated by reference.

A battery is a device that changes chemical energy into electric energy by means of electrochemical oxidation-reduction reaction (redox) reaction. The essential electrochemical unit achieving such energy change is known as a "cell". A battery contains a group of interconnected cells. The number of cells utilized relies upon the desired capacity and voltage for a specific application. A few electrochemical cells are associated with the arrangement as well as in parallel to acquire a lithium-ion battery of indicated voltage and capacity. Each cell contains the following parts: a negative terminal (anode), where electrochemical oxidation happens during discharge; a positive terminal (cathode), where electrochemical decrease happens; an electrolyte, which encourages the transportations of ions from one electrode to another electrode; a separator, which gives electronic segregation between the electrodes; and a casing, which contains the other cell parts.

Lithium-ion cells use a solid reductant as an anode and a solid oxidant as a cathode.

The cathode materials used in most of the commercial Li-ion batteries are $LiCoO_2$ or $LiNiO_2$ and the anode materials are carbonaceous. During cell charging, the cathode material releases Li ions to the electrolyte and electrons are removed from the cathode by applying an external field and are then transferred to the anode. The charge-compensating Li ions are attracted by the negative electrode and then inserted into it. During cell discharge, the reverse reaction occurs. That is, the anode supplies intercalated Li ions into the electrolyte and provides electrons to the external circuit. At the cathode, the Li ions intercalate from the electrolyte and satisfy the charge of electrons from an external circuit. Common carbon anode materials are graphite or coke-type or both combined; common cathode materials include $LiMn_2O_4$, $LiCoO_2$, and $LiNiO_2$.

The electrolyte can be either solid or liquid. The liquid electrolyte is usually a non-aqueous solution of Li salts and various solvents including ethers, esters, and carbonates. The cell reactions that occur at the cathode and anode during cell charging and discharging are represented as follows (Equations (1)-(4)):

during charging

at cathode:

$$LiMO_2 \rightarrow Li_{1-x}MO_2 + xLi^+ + xe^- \qquad (1)$$

at anode:

$$xLi^+ + xe^- + C \rightarrow Li_xC \qquad (2)$$

during discharging

at cathode:

$$Li_{1-x}MO_2 + xLi^+ + xe^- \rightarrow LiMO_2 \qquad (3)$$

at anode:

$$Li_xC \rightarrow xLi^+ + xe^- + C \qquad (4)$$

Connecting the electrodes to an external load results in electron flow in the external circuit and the ions move through the electrolyte. The charge flows result from electrochemical (or redox) reactions at the electrodes that include chemical species and electrons and occur at various voltages. The output voltage of the battery is given by the voltage difference between the two redox reactions. In a primary battery, the redox reactions can't be turned around and the system must be discharged once, while in a secondary (or rechargeable) battery, the redox reactions are reversible, which results in multiple charging and discharging cycles. The aforementioned example of electrochemical reactions of lithium-ion batteries extends to other types of lithium batteries or sodium, *mutatis mutandis.*

The invention concerns secondary or rechargeable batteries, and particularly provides for the carbon source (at the anode) in the above redox reaction (2). In the context of the invention, a 'lithium battery' or 'sodium battery' includes both solid state (with solid electrolyte) and liquid state (with liquid electrolyte) batteries. In the context of the invention, the terms 'lithium-ion battery' and 'sodium-ion battery' are reserved for battery technology with a liquid electrolyte.

In a first aspect, the invention can be described as the use of porous, chemically interconnected, carbon nanofibres-comprising carbon networks (i.e. porous carbon networks which comprise chemically interconnected carbon-nanofibres) as an active material in the anode of a lithium or a sodium battery. In this context, an "active material in the anode" is to be understood as a material in the anode that actively participates in the electrochemical charge and/or discharge reaction, providing the carbon-based material for the Li-ion intercalation/de-intercalation during charging and discharging, respectively.

Related therewith, the invention pertains to an anode for a lithium or sodium battery comprising porous, chemically interconnected, carbon nanofibres-comprising carbon networks (i.e. porous carbon networks which comprise chemically interconnected carbon-nanofibres). In a preferred embodiment, the anode essentially consists of the networks according to the invention, preferably at least 80 wt%, more preferably at least 90 wt%, most preferably 95 - 100 % of the weight of the anode.

While it is particularly advantageous to use these networks as the sole anode active material, even partial replacement of the anode active material brings about improved properties. Therefore, the invention also pertains to an anode for a lithium or a sodium battery comprising porous, chemically interconnected, carbon nanofibres-comprising carbon networks in an amount of 10 - 100 wt%, preferably more than 10 wt% and less than 100 wt%, more preferably 40 - 95 wt%, even more preferably 50- 90 wt% of the anode, the remainder preferably being additional anode materials capable of intercalation and release of lithium or sodium ions. Preferably, the anode according to the invention may contain 0.1 - 90 wt%, preferably 0.1 - 30 wt%, most preferably 0.1 -10 wt% of an additional active material. For lithium batteries, preferably the additional active material in the anode is an intercalation compound such as graphite, a metal alloy such as tin, silicon based metal alloys and/or a conversion compound such as transition-metal oxides (MO, where M is Sn, Mo, Ga, Zn, Si, Ge, Co, Ni, Cu or Fe). In a preferred embodiment, the additional active material in the anode of lithium batteries is graphite. For lithium batteries, preferably the additional active material in the anode is an intercalation compound such as graphite, a metal alloy such as tin, silicon based metal alloys, silicon or silicon-based compounds such as $SiO_2$, and/or a conversion compound such as transition-metal oxides (MO, where M is Sn, Mo, Ga, Zn, Si, Ge, Co, Ni, Cu or Fe). In a preferred embodiment, the additional active material in the anode of lithium batteries is graphite, silicon, a silicon-based compound ($SiO_2$) or a combination thereof. In another preferred embodiment, the additional active material in the anode of lithium batteries is silicon, a silicon-based compound ($SiO_2$) or a combination thereof. Most preferably, the additional active material is silicon or graphite. If the additional active material in the anode is silicon, a silicon-based compound ($SiO_2$), or a combination thereof, silicon, the silicon-based compound ($SiO_2$), or combination thereof are mixed with the carbon nanofibres-comprising carbon networks of the invention in the anode or the carbon nanofibres-comprising carbon networks of the invention are coated with silicon, a silicon-based compound ($SiO_2$), or combination thereof. For sodium batteries, preferably the additional active material in the anode is an oxide for intercalation-type anodes such as $TiO_2$, oxide for conversion-type anode such as $Fe_2O_3$, oxide for conversion-alloying-type anode such as $Sn_xO_2$ and $Sb_2O_3$ or "hard carbon", a disordered carbon material consisting of a non-graphitizable, non-crystalline and amorphous carbon structure.

Artificial graphite commonly used as an active material in the anode of batteries presents a particle size distribution D50 of 19.0-23.0 $\mu$m; in contrast, the carbon networks according to the invention present a filament diameter size distribution D50 of 70-250 nm; the inventors hypothesize that the smaller filament diameter size distribution of the carbon networks according to the invention compared to that of graphite (nm vs $\mu$m scale) together with their high conductivity result in diffusion times for intercalated ions being reduced when compared with a graphite anode. In addition, artificial graphite usually presents a specific surface area below 4.2 $m^2$/g, while that of the carbon networks of the invention is preferably 40-200 $m^2$/g; this in turn would shorten the diffusion length of the ions further because of the intercalation capacities and affinities for these ions to the more exposed holes in the surface. Therefore, the smaller crystallite sizes and open pore structure results in an improved diffusion which in turn enhances the charge and/or discharge rates.

Among the advantageous effects of the use of the carbon networks according to the invention in lithium or sodium battery anodes are a higher electroconductivity based on EIS data. In addition, the carbon networks admit a higher level of Fe and/or other metals without causing issues, which enhances the industrial applicability and safety of the anodes. The carbon network according to the invention also comprises a large distance interlayer, which enables to keep the viscosity reduced, even when used in high amounts in the anode. In fact, the carbon networks of the invention can be added with increased amounts without affecting viscosity disadvantageously.

The invention also relates to a secondary or rechargeable lithium or sodium battery comprising the above-cited lithium or sodium anode, respectively. Preferably, the secondary or rechargeable battery is a secondary or rechargeable lithium-ion or sodium-ion battery, most preferably a lithium-ion battery. In addition to the aforementioned lithium or sodium anode, the lithium or sodium battery also comprises a cathode, an electrolyte and preferably a separator between the anode and the cathode.

For lithium batteries, preferably the active material in the cathode is a lithium or sodium metal, alkali metal and/or lithium or sodium metal oxide. In a preferred embodiment, for lithium cathodes the active material is $LiCoO_2$ or $LiMn_2O_4$. For sodium batteries, preferably the active material in the cathode is an O3-type layered metal oxide such as $NaFeO_2$, P2-type layered metal oxide such as $Na_{0.6}MnO_2$, biphase layered metal oxide such as $Na_{0.78}Ni_{0.2}Fe_{0.38}Mn_{0.42}O_2$ or an oxide with anionic redox capability. Preferably, the active material in the cathode of sodium batteries is a sodium oxide ($NaMO_2$, M = V, Fe, Mn, Cu, Co., and Ni), sodium phosphate ($Na_7V_3(P_2O_7)_4$, $NaFePO_4$, transition metal oxide ($V_2O_5$) or Prussian blue (PB, $Na_2M[Fe(CN)_6]$).

The electrolyte of the lithium or sodium batteries may be liquid or solid-state. The liquid electrolyte may comprise an organic solvent and a salt of an alkali metal, preferably a lithium or sodium salt for lithium-ion and sodium-ion batteries, respectively. The liquid electrolyte of the lithium battery may comprise an organic solvent and a salt of an alkali metal, preferably a lithium salt. The liquid electrolyte of the sodium battery may comprise an organic solvent and a sodium salt. For instance, the organic solvent may be one or more of Ethylene Carbonate (EC), Propylene Carbonate (PC), Ethyl Methyl Carbonate (EMC), and diethyl carbonate (DEC); the sodium salt may be $NaPF_6$, $NaClO_4$, $NaBCl_4$, $NaSO_3CF_3$ and Na($CH_3)C_6H_4SO_3$. The electrolyte of the lithium or sodium batteries may also be solid-state and comprise inorganic-ceramic/glass-ceramic, organic polymer and/or ceramic-polymer composite electrolytes. Preferably, the electrolyte is a liquid electrolyte.

The separator of the lithium or sodium battery may comprise one or more of glass fiber, nonwoven fabric, polyethylene, polypropylene, and polyvinylidene fluoride. Preferably, the separator of the lithium or sodium battery is polypropylene.

The anode for a lithium or sodium battery according to the invention may comprise conventional additives (non-active materials) on top of the porous, chemically interconnected, carbon nanofibres-comprising carbon networks to further improve the electrochemical performance of the lithium or sodium batteries according to the invention. In particular, these additives can be added to construct a conductive percolation network to increase and keep the electronic conductivity of electrode, enabling it to charge and discharge faster, and to absorb and retain electrolyte, allowing an intimate contact between the lithium or sodium ions and active materials. It is considered within the skilled person ambit to select suitable conductive additives available in the art. In a preferred embodiment, the anode according to the invention may comprise 0.1 - 10 wt%, preferably 0.1 - 5.0 wt%, most preferably 0.1 - 3.0 wt% of one or more conductive additives selected from superconducting carbon, conductive carbon black, ketjen black, carbon dots, Super P, acetylene black, carbon nanofibers, graphene and carbon nanotubes, all of which present superior properties such as low weight, high chemical inertia and high specific surface area. In a preferred embodiment, the conductive additive is carbon black.

Binder materials are responsible for holding the active material particles within the electrode of a lithium or sodium battery together to maintain a strong connection between the electrode and the contacts. These binding materials are normally inert and have an important role in the manufacturability of the battery. The anode for a lithium or sodium battery according to the invention may comprise 0.1-10 wt%, preferably 2-8 wt%, most preferably 4-6 wt% of a binder such as Styrene Butadiene Rubber (SBR), water-based acrylic resin (water-based acrylic resin), carboxymethyl cellulose (CMC), polyvinylidene fluoride (PVDF), Polytetrafluoroethylene (PTFE), ethylene-vinyl acetate copolymer (EVA), and polyvinyl alcohol (PVA). Preferably, the binder is selected from SBR based and PVDF based binders. Most preferably, the binder is PVDF based.

The anode for lithium or sodium batteries or lithium or sodium batteries of the invention are particularly suitable for use in the manufacture of battery-powered electric devices. Hence the invention extends to battery-powered electric devices comprising at least one anode for lithium or sodium batteries or at least one lithium or sodium battery comprising the porous, chemically interconnected, carbon nanofibres-comprising carbon networks according to the invention. Here a battery-powered electric device may be a smartphone, laptop, digital cameras and camcorders, medical and communication systems, as Uninterruptible Power Supply (UPS), as power plant energy storage (i.e. from surplus wind and solar renewable energy) and electric and/or hybrid vehicles. Preferably, the anode for lithium or sodium batteries or lithium or sodium batteries according to the invention are used in Uninterruptible Power Supply (UPS) systems, portable consumer electronics and electric and/or hybrid vehicles. Given the advantages brought about by these networks when used in the anode of a lithium or sodium battery, the above list of applications is non-exhaustive.

Carbon nanofibre-comprising carbon networks

The porous, chemically interconnected carbon nanofibre-comprising carbon networks or porous carbon networks comprising chemically interconnected carbon nanofibers are preferably characterized as follows:
The skilled person will understand that a porous network refers to a 3-dimensional structure that allows fluids or gasses to pass through. A porous network may also be denoted as a porous medium or a porous material. A porous crystalline carbon network according to the invention (or a porous carbon network particle of the invention) can be seen as a big molecule, wherein the carbon atoms inherently are covalently interconnected. It is hereby understood that a porous carbon network particle is a particle with chemically interconnected (i.e. covalently bonded) fibres having intraparticle porosity, as opposed to interparticle porosity which refers to a porous network created by multiple molecules or particles and wherein the pores are formed by the space between physically aggregated particles or molecules. In the context of the current invention, intraparticle porosity may also be denoted as intramolecular porosity as the carbon network particle according to the invention can be seen as a big molecule, wherein the pores are embedded. Hence intraparticle porosity and intramolecular porosity have the same meaning in the current text and may be used interchangeably.

As the networks of the invention can be seen as one big molecule, there is no need to fuse particles or parts of the network together. Hence it is preferred that the porous, chemically interconnected, carbon nanofibres-comprising carbon networks are non-fused, intraparticle porous, chemically interconnected, crystalline carbon nanofibres-comprising carbon networks, having intraparticle porosity. Without being bound to a theory, it is believed that the benefit of having a crystalline network with intraparticle porosity over a(n amorphous) network with interparticle porosity is that the first are more robust and more resilient against crushing and breaking when force is applied. For comparison sake, carbon black consists of aggregates or agglomerates of spherical particles that may form a 3-dimensional structure, where spheres are fused with amorphous connections with weaker porosity. The interparticle pores are weaker due to the particle-particle interface and tend to collapse. Intraparticle pores are strong due to the covalently crystalline aligned bonded structure surrounding them and can withstand high forces and pressures without collapsing. This is sharp contrast with conventional carbon black, consisting of aggregates or agglomerates of spherical particles that may form a 3-dimensional structure, where spheres are fused with amorphous connection between the individual particles (not chemically 'interconnected'). Summarizing, intraparticle porosity (a trademark for the networks of the invention) refers to the situation wherein the carbon atoms surrounding the pores are covalently connected in crystalline form, wherein interparticle porosity refers to pores residing between particles which are physically aggregated, agglomerated, or have amorphous connections. Intraparticle pore volume may be characterized in terms of Mercury Intrusion Porosimetry (ASTM D4404-10) or Nitrogen Absorption method (ISO 9277:10). The pore volume of the porous carbon networks according to the invention is 0.05- 5 $cm^3/g$, preferably 0.1- 4 $cm^3/g$, more preferably 0.3 - 3.5 $cm^3/g$ and most preferably 0.5 - 3 $cm^3/g$ as measured using Mercury Intrusion Porosimetry (ASTM D4404-10). Additionally or alternatively, the carbon nanofibres-comprising carbon networks may be characterized having an intraparticle pore diameter size as measured using Mercury Intrusion Porosimetry (ASTM D4404-10) of 5 - 200 nm, preferably 10 - 150 nm, and most preferably of 20 - 130 nm. Following the same ASTM test method, the networks may have an interparticle pore diameter of 10 - 500 $\mu$m, more preferably 80 - 400 $\mu$m.

The porous networks are preferably characterized by a d-spacing of 0.34-0.5 nm, more preferably of 0.35-0.45 nm, even more preferably of 0.355-0.375 nm. d-spacing is measured according to XRD. Crucially, this d-spacing facilitates the intercalation of lithium or sodium ions. Because of their higher volume, this is particularly beneficial to the intercalation of sodium ions in sodium batteries.

The skilled person will readily understand that the term chemically interconnected in porous, chemically interconnected, carbon nanofibres-comprising carbon networks implies that the carbon-nanofibres are interconnected to other carbon-nanofibres by chemical bonds. It is also understood that a chemical bond is a synonym for a molecular or a covalent bond. Typically those places where the carbon-nanofibres are connected are denoted as junctions or junctions of fibres, which may thus be conveniently addressed as 'covalent junctions' These terms are used interchangeable in this text. In the carbon networks according to the invention, the junctions are formed by covalently connected carbon atoms. It furthermore follows that the length of a fibre is defined as the distance between junctions which are connected by fibrous carbon material.

In a preferred embodiment, at least part of the fibres in the carbon nanofibres-comprising carbon networks of the invention are crystalline carbon nanofibres. Preferably at least 20 wt.% of the carbon in the carbon networks in the invention is crystalline, more preferably at least 40 wt.%, even more preferably at least 60 wt.%, even more preferably at least 80 wt.% and most preferably at least 90 wt.%. Alternatively the amount of crystalline carbon is 20-90 wt.%, more preferably 30-70 wt.%, and more preferably 40-50 wt.% compared to the total carbon in the carbon networks of the invention. Here 'crystalline' has its usual meaning and refers to a degree of structural order in a material. In other words the carbon atoms in the nanofibres are to some extent arranged in a regular, periodic manner. The areas or volumes which are crystalline can be denoted as crystallites. A carbon crystallite is hence an individual carbon crystal.

A measure for the size of the carbon crystallites is the stacking height of graphitic layers. Standard ASTM grades of carbon black have a stacking height of the graphitic layers within these crystallites ranging from 11-13 Å (angstroms). In a preferred embodiment, the carbon nanofibres-comprising carbon networks of the invention preferably have a stacking height of at least 15 Å (angstroms), preferably at least 16 Å, more preferably at least 17 Å, even more preferably at least 18 Å, even more preferably at least 19 Å and still more preferably at least 20 Å. If needed the carbon networks with crystallites as large as 100 Å (angstroms) can be produced. Hence the carbon networks of the invention have a stacking height of 15 - 100 Å (angstroms), more preferably of up to 80 Å, even more preferably of up to 60 Å, even more preferably of up to 40 Å, still more preferably of up to 30 Å. It is therefore understood that the stacking height of graphitic layers within crystallites in the carbon networks of the invention is 15-90 Å (angstroms), more preferably 16-70 Å, even more preferably 17-50 Å, still more preferably 18-30 Å and most preferably up to 25 Å.

The porous, chemically interconnected, carbon nanofibre-comprising carbon networks may be defined as having chemically interconnected carbon nanofibres, wherein carbon nanofibres are interconnected via junction parts, wherein several (typically 3 or more, preferably at least 10 or more) nanofibres are covalently joined. Said carbon nanofibres are those parts of the network between junctions. The fibres typically are elongated bodies which are solid (i.e. non-hollow), preferably having an average diameter or thickness of 1 - 500 nm, preferably of 5 - 350 nm, more preferably up to 100 nm, in one embodiment 10 - 100 nm, compared to the average particle size of 10 - 400 nm for carbon black particles. In one embodiment, the average fibre length (i.e. the average distance between two junctions) is preferably in the range of 30 - 10,000 nm, more preferably 50 - 5,000 nm, more preferably 100 - 5,000 nm, more preferably at least 200 - 5,000 nm, as for instance can be determined using SEM.

The nanofibres or structures may preferably be described in terms of an average aspect ratio of fibre length-to-thickness of at least 2, preferably at least 3, more preferably at least 4, and most preferably at least 5, preferably at most below 50; in sharp contrast with the amorphous (physically associated) aggregates formed from spherical particles obtained through conventional carbon black manufacturing. The average aspect ratio of fibre length-to-thickness can be determined for instance using SEM.

The carbon nanofibres structures may be defined as carbon networks formed by chemically interconnected (covalently bonded) carbon nanofibres. Said carbon networks have a 3-dimensional configuration wherein there is an opening between the carbon nanofibres (the intraparticle porosity, see above) that is accessible to a continuous phase, which may be a liquid - such as a solvent or an aqueous phase -, a gas or any other phase. Said carbon networks are at least 0.5 $\mu$m in diameter, preferably at least 1 $\mu$m in diameter, preferably at least 5 $\mu$m in diameter, more preferably at least 10 $\mu$m in diameter, even more preferably at least 20 $\mu$m in diameter and most preferably at least 25 $\mu$m in all dimensions. Alternatively said carbon networks are at least 1 $\mu$m in diameter in 2 dimensions and at least 5 $\mu$m in diameter, preferably at least 10 $\mu$m in diameter, more preferably a least 20 $\mu$m in diameter and most preferably at least 25 $\mu$m in diameter in the other dimension. Here, and also throughout this text, the term dimension is used in its normal manner and refers to a spatial dimension. There are 3 spatial dimensions which are orthogonal to each other and which define space in its normal physical meaning. It is furthermore possible that said carbon networks are at least 10 $\mu$m in diameter in 2 dimensions and at least 15 $\mu$m in diameter, preferably at least 20 $\mu$m in diameter, more preferably a least 25 $\mu$m in diameter, more preferably at least 30 $\mu$m in diameter and most preferably at least 50 $\mu$m in diameter in the other dimension. These measurements are based on laser diffraction.

The carbon nanofibres-comprising carbon networks may have a volume-based aggregate size as measured using laser diffraction (ISO 13320-1) or dynamic light scattering analysis of 0.1 - 100 $\mu$m, preferably 1 - 50 $\mu$m, more preferably 1 - 40 $\mu$m, more preferably of 5 - 35 $\mu$m, more preferably of 5 - 25 $\mu$m and most preferably of 5 - 20 $\mu$m. In a most preferred embodiment, the networks have a volume-based aggregate size as measured using laser diffraction (ISO 13320-1) or dynamic light scattering analysis of 5 - 10 $\mu$m. The networks preferably have an advantageously narrow filament diameter size distribution, particularly compared to traditional carbon black. The filament diameter size distribution may be characterized between 10 and 200 nm, preferably 10 - 100 nm as determined using the transmission electronic microscope and measuring the diameter of the fibres. The networks may be characterized by an aggregate strength between 0.5 and 1, more preferably between 0.6 and 1, as determined by the c-OAN/OAN ratio measured according to ASTM D3493-16/ASTM D2414-16 respectively. The c-OAN is preferably 20 - 200 cc/100g. This is an advantageously high strength which prevents collapse of the intraporosity even in high-pressure applications.

The porous, chemically interconnected, carbon nanofibres-comprising carbon networks may also comprise carbon black particles built in as part of the network. These particles are profoundly found at the junctions between carbon nanofibres, but there may also be carbon black particles present at other parts of the network. The carbon black particles preferably have a diameter of at least 0.5 times the diameter of the carbon nanofibres, more preferably at least the same diameter of the carbon nanofibres, even more preferably at least 2 times the diameter of the carbon nanofibres, even more preferably at least 3 times the diameter of the carbon nanofibres, still more preferably at least 4 times the diameter of the carbon nanofibres and most preferably at least 5 times the diameter of the carbon nanofibres. It is preferred that the diameter of the carbon black particles is at most 10 times the diameter of the carbon nanofibres. Such mixed networks are denoted as hybrid networks.

The porous, chemically interconnected, carbon nanofibres-comprising carbon networks have a functionalized surface. In other words, the surface comprises groups that alter the hydrophobic nature of the surface - which is typical for carbon - to a more hydrophilic nature. The surface of the carbon networks comprises carboxylic groups, hydroxylic groups and phenolics. These groups add some polarity to the surface and may change the properties of the compound material in which the functionalized carbon networks are embedded. The surface area of the carbon nanofibres-comprising carbon networks as measured according to the Brunauer, Emmett and Teller (BET) method (ISO 9277:10) is preferably in the range of 15 - 300 m$^2$/g, more preferably 20 - 270 m$^2$/g, even more preferably 30 - 250 m$^2$/g and most preferably 30 - 210 m$^2$/g.

The porous, chemically interconnected, carbon nanofibres-comprising carbon networks comprise metal catalyst nanoparticles, but only in minute amounts, typically at least 10 ppm based on the weight of the carbon nanofibres-comprising carbon networks. These are a fingerprint of the preparation method. There is preferred an amount of at most 5000 ppm, more preferably at most 3000 ppm, especially at most 2000 ppm of metal nanoparticles based on the weight of the networks measured by ICP-OES (Inductive Coupled Plasma- Optical Emission Spectrometry). These metal particles are also embedded in the networks. These particles may have an average particle size between 1 nm and 100 nm. Preferably said particles are monodisperse particles having deviations from their average particle size which are within 10 %, more preferably within 5 %. Non-limiting examples of nanoparticles included in the carbon nanofibres-comprising carbon networks are the noble metals (Pt, Pd, Au, Ag), iron-family elements (Fe, Co and Ni), Ru, and Cu. Suitable metal complexes may be (i) platinum precursors such as $H_2PtCl_6$; $H_2PtCl_6.xH_2O$; $K_2PtCl_4$; $K_2PtCl_4.xH_2O$; $Pt(NH_3)_4(NO_3)_2$; $Pt(C_5H_7O_2)_2$, (ii) ruthenium precursors such as $Ru(NO)(NO_3)_3$; $Ru(dip)_3Cl_2$ [dip = 4,7-diphenyl-1,10-fenanthroline]; $RuCl_3$, or (iii) palladium precursors such as $Pd(NO_3)_2$, or (iv) nickel precursors such as $NiCl_2$ or $NiCl_2.xH_2O$; $Ni(NO_3)_2$; $Ni(NO_3)_2.xH_2O$; $Ni(CH_3COO)_2$; $Ni(CH_3COO)_2.xH_2O$; $Ni(AOT)_2$ [AOT = bis(2-ethylhexyl)sulphosuccinate], wherein x may be any integer chosen from 1, 2, 3, 4, 5, 6, 7, 8, 9 or 10 and typically may be 6, 7 or 8.

The porous, chemically interconnected, carbon nanofibres-comprising carbon networks are preferably obtainable by the process for the production of crystalline carbon networks in a reactor **3** which contains a reaction zone **3b** and a termination zone **3c,** by injecting a thermodynamically stable micro-emulsions of the water-in-oil, oil-in-water or bicontinuous type **c,** preferably a water-in-oil or bicontinuous micro-emulsion **c,** a bicontinuous micro-emulsion **c,** said micro-emulsion comprising metal catalyst nanoparticles, into the reaction zone **3b** which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks **e,** transferring these networks **e** to the termination zone **3c,** and quenching or stopping the formation of crystalline carbon networks in the termination zone by spraying in water **d.**

In a more preferred embodiment, the networks are obtainable by the above process, said reactor being a furnace carbon black reactor **3** which contains, along the axis of the reactor **3,** a combustion zone **3a,** a reaction zone **3b** and a termination zone **3c,** by producing a stream of hot waste gas **a1** in the combustion zone by burning a fuel a in an oxygen-containing gas **b** and passing the waste gas **a1** from the combustion zone **3a** into the reaction zone **3b,** spraying a micro-emulsion of the water-in-oil, oil-in-water or bicontinuous type **c,** preferably a water-in-oil or bicontinuous micro-emulsion **c,** most preferably a bicontinuous micro-emulsion **c,** said micro-emulsion comprising metal catalyst nanoparticles, in the reaction zone 3b containing the hot waste gas, carbonizing said emulsion at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, and quenching or stopping the reaction in the termination zone 3c by spraying in water **d,** to yield crystalline carbon networks **e.**

In the above, 'chemically interconnected' is understood to mean that the nanofibres are covalently bonded to one another, clearly distinct from physical aggregates.

The networks are preferably obtainable by the above process wherein further processing details are provided in the section headed "Process for obtaining carbon nanofibres-comprising carbon networks" here below, and in Figure 1A.

Process for obtaining carbon nanofibres-comprising carbon networks

A process for obtaining the above-described porous, chemically interconnected, carbon nanofibres-comprising carbon networks can be described best as a modified carbon black manufacturing process, wherein 'modified' is understood that a suitable oil, preferably an oil comprising at least 14 C atoms (>C14) such as carbon black feedstock oil (CBFS), is provided to the reaction zone of a carbon black reactor as part of a single-phase emulsion, being a thermodynamically stable micro-emulsion of the water-in-oil, oil-in-water or bicontinuous type, preferably a water-in-oil or bicontinuous micro-emulsion, most preferably a bicontinuous micro-emulsion, comprising metal catalyst nanoparticles. The emulsion is preferably provided to the reaction zone by spraying, thus atomizing the emulsion to droplets. While the process can be carried out batch or semi-batch wise, the modified carbon black manufacturing process is advantageously carried out as a continuous process. The single-phase emulsion is a micro-emulsion comprising metal catalyst nanoparticles. The preferred single-phase emulsion comprises CBFS oil, and may be referred to as 'emulsified CBFS' in the context of the invention.

The process for the production of the carbon networks can be performed in a reactor **3** which contains a reaction zone **3b** and a termination zone **3c,** by injecting a single-phase emulsion **c,** being a micro-emulsion of the water-in-oil, oil-in-water or bicontinuous type **c,** preferably a water-in-oil or bicontinuous micro-emulsion **c,** most preferably a bicontinuous micro-emulsion **c,** into the reaction zone **3b** which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce porous, chemically interconnected, carbon nanofibres-comprising carbon networks, transferring these networks to the termination zone **3c,** and quenching or stopping the formation of porous, chemically interconnected, carbon nanofibres-comprising carbon networks in the termination zone by spraying in water **d.** The single-phase emulsion is preferably sprayed into the reaction zone. Reference is made to Figure 1A.

Alternatively the process for the production of the porous, chemically interconnected, carbon nanofibres-comprising carbon networks is performed in a furnace carbon black reactor **3** which contains, along the axis of the reactor **3,** a combustion zone **3a,** a reaction zone **3b** and a termination zone **3c,** by producing a stream of hot waste gas **a1** in the combustion zone by burning a fuel a in an oxygen-containing gas **b** and passing the waste gas **a1** from the combustion zone **3a** into the reaction zone **3b,** spraying (atomizing) a single-phase emulsion **c** according to the invention, preferably a micro-emulsion of the water-in-oil, oil-in-water or bicontinuous type **c,** preferably a water-in-oil or bicontinuous micro-emulsion **c,** most preferably a bicontinuous micro-emulsion **c,** in the reaction zone **3b** containing the hot waste gas, carbonizing said emulsion at increased temperatures (at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C), and quenching or stopping the reaction (i.e. the formation of porous, chemically interconnected, carbon nanofibres-comprising carbon networks) in the termination zone **3c** by spraying in water **d.** The reaction zone **3b** comprises at least one inlet (preferably a nozzle) for introducing the emulsion, preferably by atomization. Reference is made to Figure 1A.

Residence times for the emulsion in the reaction zone of the furnace carbon black reactor can be relatively short, preferably ranging from 1 - 1000 ms, more preferably 10 - 100 ms. Longer residence times may have an effect on the properties of the carbon networks. An example may be the size of crystallites which is higher when longer residence times are used.

In accordance with conventional carbon black manufacturing processes, the oil phase can be aromatic and/or aliphatic, preferably comprising at least 50 wt.% C14 or higher, more preferably at least 70 wt.% C14 or higher (based on the total weight of the oil). List of typical oils which can be used, but not limited to obtain stable emulsions are carbon black feedstock oils (CBFS), phenolic oil, anthracene oils, (short-medium-long chain) fatty acids, fatty acids esters and paraffins. The oil is preferably a C14 or higher. In one embodiment, the oil preferably has high aromaticity. Within the field, the aromaticity is preferably characterized in terms of the Bureau of Mines Correlation Index (BMCI). The oil preferably has a BMCI > 50. In one embodiment, the oil is low in aromaticity, preferably having a BMCI < 15.

CBFS is an economically attractive oil source in the context of the invention, and is preferably a heavy hydrocarbon mix comprising predominantly C14 to C50, the sum of C14 - C50 preferably amounting to at least 50 wt.%, more preferably at least 70 wt.% of the feedstock. Some of the most important feedstocks used for producing carbon black include clarified slurry oil (CSO) obtained from fluid catalytic cracking of gas oils, ethylene cracker residue from naphtha steam cracking and coal tar oils. The presence of paraffins (<C15) substantially reduces their suitability, and a higher aromaticity is preferred. The concentration of aromatics determines the rate at which carbon nuclei are formed. The carbon black feedstock preferably has a high BMCI to be able to offer a high yield with minimum heat input hence reducing the cost of manufacturing. In a preferred embodiment, and in accordance with current CBFS specifications, the oil, including mixtures of oil, has a BMCI value of more than 120. While the skilled person has no difficulties understanding which are suitable CBFS, merely as a guide it is noted that - from a yield perspective - a BMCI value for CBFS is preferably more than 120, even more preferably more than 132. The amount of asphaltene in the oil is preferably lower than 10 wt.%, preferably lower than 5.0 wt.% of the CBFS weight. The CBFS preferably has low sulphur content, as sulphur adversely affects the product quality, leads to lower yield and corrodes the equipment.

It is preferred that the sulphur content of the oil according to ASTM D1619 is less than 8.0 wt.%, preferably below 4.0 wt.% more preferably less than 2.0 wt.%.

The emulsion, preferably a CBFS-comprising emulsion, is a "single-phase emulsion" which is understood to mean that the oil phase and the water phase optically appear as one miscible mixture showing no physical separation of oil, water or surfactant to the naked eye. The single-phase emulsion is a micro-emulsion of the water-in-oil, oil-in-water or bicontinuous type, preferably a water-in-oil or bicontinuous micro-emulsion, most preferably a bicontinuous micro-emulsion. The process by which an emulsion completely breaks (coalescence), i.e. the system separates into bulk oil and water phases, is generally considered to be controlled by four different droplet loss mechanisms, i.e., Brownian flocculation, creaming, sedimentation flocculation and disproportionation.

Provided that a micro-emulsion as described above is obtained, the amounts of water and oil are not regarded limiting, but it is noted that reduced amounts of water (and increased amounts of oil) improve yields. The water content is typically between 5 and 50 wt% of the emulsion, preferably 10 - 40 wt%, even more preferably up to 30 wt%, more preferably 10 - 20 wt% of the emulsion. While higher amounts of water can be considered, it will be at the cost of yield. Without wishing to be bound by any theory, the inventors believe that the water phase attributes to the shape and morphology of the networks thus obtained.

The choice of surfactant(s) is not regarded a limiting factor, provided that the combination of the oil, water and surfactant(s) results in a stable micro-emulsion as defined here above. As further guidance to the skilled person, it is noted that the surfactant can be selected on the basis of the hydrophobicity or hydrophilicity of the system, i.e. the hydrophilic-lipophilic balance (HLB). The HLB of a surfactant is a measure of the degree to which it is hydrophilic or lipophilic, determined by calculating values for the different regions of the molecule, according to the Griffin or Davies method. The appropriate HLB value depends on the type of oil and the amount of oil and water in the emulsion, and can be readily determined by the skilled person on the basis of the requirements of retaining a thermodynamically stable, single phase emulsion as defined above. It is found that an emulsion comprising more than 50 wt% oil, preferably having less than 30 wt% water phase, would be stabilized best with a surfactant having an HLB value above 7, preferably above 8, more preferably above 9, most preferably above 10. On the other hand, an emulsion with at most 50 wt% oil would be stabilized best with a surfactant having an HLB value below 12, preferably below 11, more preferably below 10, most preferably below 9, particularly below 8. The surfactant is preferably selected to be compatible with the oil phase. In case the oil is a CBFS-comprising emulsion with a CBFS, a surfactant with high aromaticity is preferred, while an oil with low BMCI, such as characterized by BMCI < 15, would be stabilized best using aliphatic surfactants. The surfactant(s) can be cationic, anionic or non-ionic, or a mixture thereof. One or more non-ionic surfactants are preferred, in order to increase the yields since no residual ions will be left in the final product. In order to obtain a clean tail gas stream, the surfactant structure is preferably low in sulfur and nitrogen, preferably free from sulfur and nitrogen. Non-limiting examples of typical non-ionic surfactants which can be used to obtain stables emulsions are commercially available series of Tween, Span, Hypermer, Pluronic, Emulan, Neodol, Triton X and Tergitol.

In the context of the invention, a micro-emulsion is a dispersion made of water, oil (preferably CBFS), and surfactant(s) that is a single optically and thermodynamically stable liquid with dispersed domain diameter varying approximately from 1 to 500 nm, preferably 1 to 100 nm, usually 10 to 50 nm. In a micro-emulsion the domains of the dispersed phase are either globular (i.e. droplets) or interconnected (to give a bicontinuous micro-emulsion). In a preferred embodiment, the surfactant tails form a continuous network in the oil-phase of a micro-emulsion of the water-in-oil, oil-in-water or bicontinuous type, preferably a water-in-oil or bicontinuous micro-emulsion, most preferably a bicontinuous micro-emulsion. The water domains should contain a metal catalyst, preferably having an average particle size between 1 nm and 100 nm.

The single-phase emulsion, i.e. a micro-emulsion of the water-in-oil, oil-in-water or bicontinuous type, preferably a water-in-oil or bicontinuous micro-emulsion, most preferably a bicontinuous micro-emulsion, further comprises metal catalyst nanoparticles preferably having an average particle size between 1 and 100 nm. The skilled person will find ample guidance in the field of carbon nanotubes (CNTs) to produce and use these kinds of nanoparticles. These metal nanoparticles are found to improve network formation in terms of both rates and yields, and reproducibility. Methods for manufacturing suitable metal nanoparticles are found in Vinciguerra et al. "Growth mechanisms in chemical vapour deposited carbon nanotubes" Nanotechnology (2003) 14, 655; Perez-Cabero et al. "Growing mechanism of CNTs: a kinetic approach" J. Catal. (2004) 224, 197-205; Gavillet et al. "Microscopic mechanisms for the catalyst assisted growth of single-wall carbon nanotubes" Carbon. (2002) 40, 1649-1663 and Amelinckx et al. "A formation mechanism for catalytically grown helix-shaped graphite nanotubes" Science (1994) 265, 635-639, their contents about manufacturing metal nanoparticles herein incorporated by reference.

The metal catalyst nanoparticles are used in a micro-emulsion of the water-in-oil, oil-in-water or bicontinuous type, preferably a water-in-oil or bicontinuous micro-emulsion, most preferably a bicontinuous micro-emulsion. Advantageously, the uniformity of the metal particles is controlled in said (bicontinuous) micro-emulsion by mixing a first (bicontinuous) micro-emulsion in which the aqueous phase contains a metal complex salt capable of being reduced to the ultimate metal particles, and a second (bicontinuous) micro-emulsion in which the aqueous phase contains a reductor capable of reducing said metal complex salt; upon mixing the metal complex is reduced, thus forming metal particles. The controlled (bicontinuous) emulsion environment stabilizes the particles against sintering or Ostwald ripening. Size, concentrations and durability of the catalyst particles are readily controlled. It is considered routine experimentation to tune the average metal particle size within the above range, for instance by amending the molar ratio of metal precursor vs. the reducing agent. An increase in the relative amount of reducing agent yields smaller particles. The metal particles thus obtained are monodisperse, deviations from the average particle size are preferably within 10 %, more preferably within 5 %. Also, the present technology provides no restraint on the actual metal precursor, provided it can be reduced. Non-limiting examples of nanoparticles included in the carbon nanofibres-comprising carbon networks are the noble metals (Pt, Pd, Au, Ag), iron-family elements (Fe, Co and Ni), Ru, and Cu. Suitable metal complexes may be (i) platinum precursors such as $H_2PtCl_6$; $H_2PtCl_6.xH_2O$; $K_2PtCl_4$; $K_2PtCl_4.xH_2O$; $Pt(NH_3)_4(NO_3)_2$; $Pt(C_5H_7O_2)_2$, (ii) ruthenium precursors such as $Ru(NO)(NO_3)_3$; $Ru(dip)_3Cl_2$ [dip = 4,7-diphenyl-1,10-fenanthroline]; $RuCl_3$, or (iii) palladium precursors such as $Pd(NO_3)_2$, or (iv) nickel precursors such as $NiCl_2$ or $NiCl_2.xH_2O$; $Ni(NO_3)_2$; $Ni(NO_3)_2.xH_2O$; $Ni(CH_3COO)_2$; $Ni(CH_3COO)_2.xH_2O$; $Ni(AOT)_2$ [AOT = bis(2-ethylhexyl)sulphosuccinate], wherein x may be any integer chosen from 1, 2, 3, 4, 5, 6, 7, 8, 9 or 10 and typically is 6, 7 or 8. Non-limiting suitable reducing agents are hydrogen gas, sodium boron hydride, sodium bisulphate, hydrazine or hydrazine hydrate, ethylene glycol, methanol and ethanol. Also suited are citric acid and dodecylamine. The type of metal precursor is not an essential part of the invention. The metal of the particles of the (bicontinuous) micro-emulsion are preferably selected from the group consisting of Pt, Pd, Au, Ag, Fe, Co, Ni, Ru and Cu, and mixtures thereof, in order to control morphology of the carbon structures networks ultimately formed. The metal nanoparticles end up embedded inside these structures where the metal particles are physically attached to the structures. While there is no minimum concentration of metal particles at which these networks are formed - in fact networks are formed using the modified carbon black manufacturing process according to the invention - it was found that the yields increase with the metal particle concentrations. In a preferred embodiment, the active metal concentration is at least 1 mM, preferably at least 5 mM, preferably at least 10 mM, more preferably at least 15 mM, more preferably at least 20 mM, particularly at least 25 mM, most preferably up to 3500 mM, preferably up to 3000 mM. In one embodiment, the metal nanoparticles comprise up to 250 mM. These are concentrations of the catalyst relative to the amount of the aqueous phase of the (bicontinuous) micro-emulsion.

Atomization of the single-phase emulsion, preferably a CBFS-comprising emulsion, is preferably realized by spraying, using a nozzle-system **4,** which allows the emulsion droplets to come in contact with the hot waste gas **a1** in the reaction zone **3b,** resulting in traditional carbonization, network formation and subsequent agglomeration, to produce carbon networks according to the invention. The injection step preferably involves increased temperatures above 600 °C, preferably between 700 and 3000 °C, more preferably between 900 and 2500 °C, more preferably between 1100 and 2000 °C.

Examples:

Example 1: characterization of lithium-ion battery anodes comprising carbon nanofibres-comprising carbon networks according to the invention

The performance of lithium-ion battery anodes comprising carbon nanofibres-comprising carbon networks according to the invention ('carbon networks') Grade A, Grade B, Grade C and Grade D has been compared with the performance of lithium-ion battery anodes comprising artificial graphite (AG) and those comprising conductive carbon black (Super C65) as active materials. Both Grade A and Grade B have been manufactured in furnace black reactor by using the same feedstock. The residence times of Grade A and B were in the ranges 400-800 milliseconds and 10-100 milliseconds (based on theoretical model), respectively. Grade D and Grade C have also been manufactured in a furnace carbon black reactor by using the same feedstock and same residence times than A and B, respectively. Grade D is produced by using 30% higher feed rate compared to A, while Grade C is produced by using 30% lower feedstock rate compared to B.

*Anode Paste Preparation*

PVDF in mg amounts was dissolved in NMP (7.00 g) using mechanical stirring for 45 min. Carbon in g amounts was added, and glass beads of 4 mm in diameter (1.0 g) were also added to increase shear during mixing. The paste was mixed in a Speedmixer (Hauschildt) for 2 min at 2500 rpm, followed by another 10 min at 2500 rpm to obtain the anode paste.

*Table 1. Anode paste preparation.*

| Anode | Carbon | PVDF | NMP |
|---|---|---|---|
| | [g] | [mg] | [g] |
| Artificial graphite (AG) | 3.000 | 300 | 7.00 |
| SuperC65 | 0.400 | 40 | 7.00 |
| Grade A | 1.520 | 152 | 7.00 |
| Grade B | 0.700 | 70 | 7.00 |
| Grade C | 0.705 | 71 | 7.00 |
| Grade D | 1.522 | 152 | 7.00 |

*Anode Preparation*

A glass plate was thoroughly cleaned and dried using acetone. Drops of NMP are added to the glass plate in order to hold the copper foil (>99.9% Cu, thickness 10 micron, Nanografi) in place by capillary forces. The copper foil was cleaned using NMP and subsequently dried using a lint free cloth. The anode paste was cast using a doctor blade that was set at a height as specified in the tables. The glass plate was transferred to an oven and kept overnight at 110 °C. The anode was punched (14 mm diameter).

*Half-Cell Preparation*

A spring, spacer, lithium disc (15.6 mm), drops of electrolyte (EC/EMC 1:1 1M $LiPF_6$), electrolyte (EC/EMC 1:1 1M LiPF6) soaked separator (20 mm), drops of electrolyte (EC/EMC 1:1 1M $LiPF_6$) and downfacing anode are crimped together in a CR2032 coin cell inside a glovebox. After extraction of the half-cell from the glovebox, it was immediately used for electrochemical testing.

*Table 2. Characterisation of anode materials according to the invention.*

| Characterisation | | Artificial Graphite | Super C65 [3] | Grade A | Grade B | Grade C | Grade D |
|---|---|---|---|---|---|---|---|
| d-spacing (XRD) | nm | 0.335 [2] | | 0.362 | 0.364 | 0.371 | 0.369 |
| Pore Volume (N2 physisorption) | [mL/g] | | 0.12 | | 0.746 | | |
| Pore Volume (MIP) | [mL/g] | | | 0.61 | 0.66 | 0.66 | 0.74 |

(continued)

| Characterisation | | Artificial Graphite | Super C65 [3] | Grade A | Grade B | Grade C | Grade D |
|---|---|---|---|---|---|---|---|
| Surface Area (BET) | [m$^2$/g] | ≤ 4.2 | 62 | 41 | 110 | 189 | 49 |
| Pore Diameter (MIP) | [nm] | | | 70 | 20 | 20 | 70 |
| Pore Diameter (BET) | [nm] | | 9.7 | | | | |
| Particle Size Distribution (DCP, Δ50, ISO 15825:2017) | [nm] | | | 249 | 35 | 44 | 196 |
| Aggregate size distribution (Laser Diffraction - 2 bars Δ50) | [μm] | | | 8.3 | 13.9 | 4.9 | 6.10 |
| Particle diameter (SEM) | [nm] | | < 50[4] | 74 | 30 | 35 | 61 |
| [1] Artificial Graphite sourced from MTI Corporation | | | | | | | |
| [2] Delhaes, P. (2001). Graphite and Precursors CRC Press. ISBN 978-90-5699-228-6. | | | | | | | |
| [3] For Super C65 data: https://www.rsc.org/suppdata/d0/ta/d0ta00254b/d0ta00254b1.pdf | | | | | | | |
| [4] based on TEM: https://www.msesupplies.com/products/super-c65-carbon-black-conductive-additive-for-lithium-ion-battery-cathode-and-anode-50g?variant=31262541709370 | | | | | | | |

a) Capacity:

The fresh half-cell was discharged at a constant discharge current of 0.2 C (discharge in ~5 hours), until the potential was dropped to 0.01 V. The half-cell was then kept at 0.01 V for 1 hour, or until the discharge current was <1% of initial discharge current. The half-cell was then left to equilibrate for 1 hour, before being charged at 0.2 C (charge in ~5 hours) to 2.0 V. The half-cell was then kept at 2.0 V for 1 hour, or until the charge current was <1% of initial charge current. Capacity was calculated by multiplying the charging current by the time it takes to reach 2.0 V, including the current that was required to keep the potential at 2.0 V for 1 hour.

*Table 3: Capacity of lithium-ion battery anodes comprising carbon nanofibres-comprising carbon networks according to the invention.*

| Carbon | Anode loading | Doctor Blade Height | Amount of binder | C-rate | Capacity | | Specific capacity |
|---|---|---|---|---|---|---|---|
| | [mg carbon] | [micron] | [wt.%] | [C] | [# cycle] | [% AG theoretical]* | [mAh/g of carbon] |
| Grade A | 1.51 | 50 | 9.02 | 0.2 | 2 | 101.7 | 344.4 |
| Grade B | 2.42 | 10 | 9.09 | 0.2 | 2 | 100.1 | 338.9 |
| Artificial Graphite | 6.92 | 30 | 9.13 | 0.2 | 5 | 95.1 | 322.1 |
| Super C65** | 0.87 | 250 | 9.25 | 0.2 | 6 | - | 249.1 |
| Grade C | 0.91 | 100 | 9.15 | 0.2 | 6 | 105.3 | 356.6 |
| Grade D | 1.00 | 50 | 9.10 | 0.2 | 5 | 95.4 | 323.1 |
| * Based on theoretical specific capacity of AG (338.6 mAh/g) and the number of cycle in column on the left. | | | | | | | |
| ** The current applied for this GCPL was based on 200 mAh/g theoretical of SuperP, not AG. | | | | | | | |

In the table above, AG % is the relative % of capacity compared to the TDS value of artificial graphite (338,6 mAh/g). Electrochemical tests on an A and B containing anodes in a Li-ion half-cell unexpectedly revealed that A and B Li-ion capacity is (at least) comparable with that of artificial graphite.

b) Cyclability (cycle life)

The fresh half-cell was discharged at a constant discharge current of 0.2 C (discharge in ~5 hours), until the potential was dropped to 0.01 V. The half-cell was then kept at 0.01 V for 1 hour, or until the discharge current was <1% of initial discharge current. The half-cell was then left to equilibrate for 1 hour, before being charged at 0.2 C (charge in ~5 hours) to 2.0 V. The half-cell was then kept at 2.0 V for 1 hour, or until the charge current was <1% of initial charge current. This was a single cycle. The cycle was repeated for as many times as possible (in view of time) and the decrease in capacity was monitored as a function of cycles.

*Table 4: Cyclability (life-time) of lithium-ion battery anodes comprising carbon nanofibres-comprising carbon networks according to the invention*

| Carbon | Anode loading | Doctor Blade Height | Amount of binder | C-rate | | Specific Capacity | Specific Capacity | Capacity retention |
|---|---|---|---|---|---|---|---|---|
| | [mg carbon] | [micron] | [wt.%] | [C] | [# last cycle] | [mAh/g of carbon] * | mAh/g of carbon] ** | [%] *** |
| A | 1.51 | 50 | 9.02 | 0.2 | 101 | 344.4 | 328.1 | 95.3 |
| B | 2.42 | 10 | 9.09 | 0.2 | 101 | 338.9 | 241.1 | 71.1 |
| Artificial Graphite | 6.92 | 30 | 9.13 | 0.2 | 101 | 322.1 (from 5th cycle) | 236.5 | 73.4 |
| C | 0.91 | 100 | 9.15 | 0.2 | 77 | 356.6 (from 6th cycle) | 333.7 | 93.6 |
| D | 1.00 | 50 | 9.10 | 0.2 | 128 | 323.1 (from 5th cycle) | 315.7 | 97.7 |
| * Specific capacity from the 2nd cycle of the measurement unless stated otherwise | | | | | | | | |
| ** Specific capacity from the last cycle of the measurement. | | | | | | | | |
| *** Capacity retention between 2nd cycle and last cycle, unless stated otherwise. | | | | | | | | |

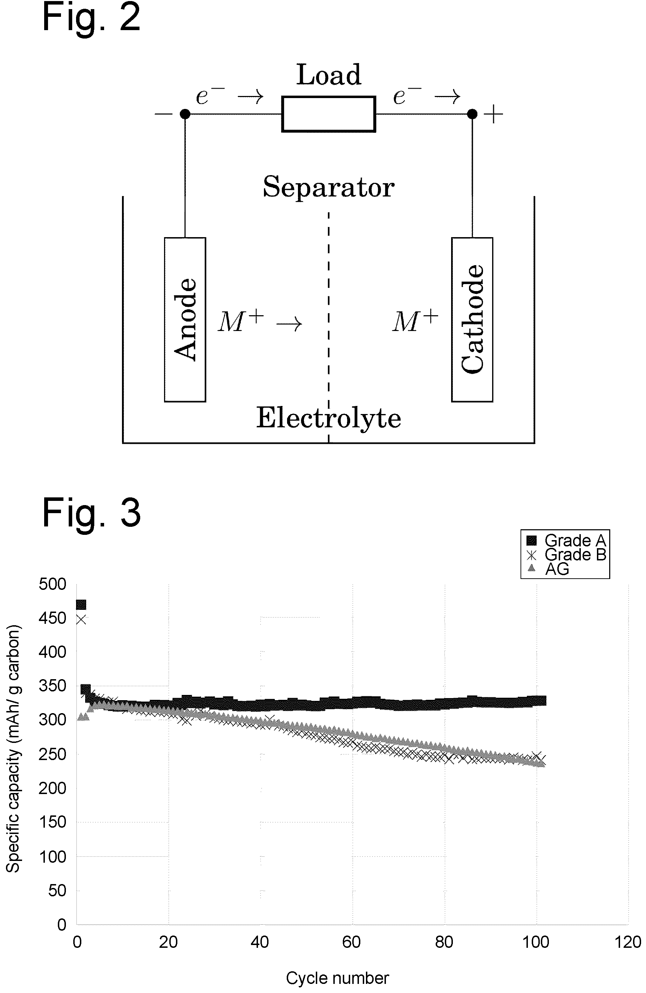

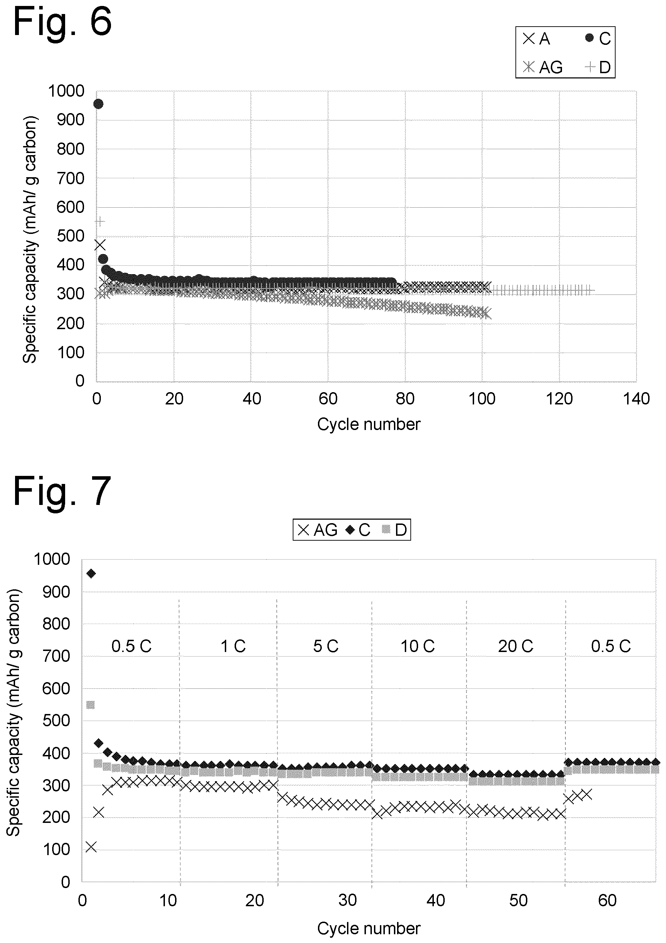

The rate capability test of Grade A showed capacity retention at high charge/discharge rate. Also, the capacity loss upon cycling was lower than expected. This is unexpected, because normally capacity is lower at higher charge/-discharge rate, and the capacity loss upon cycling is larger at higher charge/discharge rates. Figure 3 further shows that Grade A (squares) achieves a more stable specific capacity over time when compared to AG (triangles), while Grade B (crosses) achieves a similar specific capacity over time when compared to AG (triangles). Similarly to Grade A, Grade C and Grade D showed capacity retention at high charge/discharge rate. Figure 6 shows that the performance of Grade C (circles) and Grade D (pluses) is similar to Grade A (crosses), with stable specific capacity over time when compared to AG (stars). The specific capacity of Grade D remained stable for at least 128 cycles.

c) Electrochemical Impedance Spectroscopy (EIS):

Electrical Impedance Spectroscopy is measured on a fresh half-cell at open cell potential ($E_{OC}$). The EIS spectra are recorded between 10 kHz and 0.1 Hz, with 6 points per decade. The amplitude of the potential (sinoid) is set at 10 mV. The data is modelled using a Randles equivalent circuit, providing a quantity for $R_b$ (bulk impedance), $R_{SEI}$ (Solid Electrolyte Interface Impedance), $R_{CT}$ (Charge Transfer Impedance), and W (Warburg coëfficient, related to Li-ion diffusivity).

*Table 5: Ohmic resistance, resistance through SEI layer, charge-transfer resistance through electrode/electrolyte interface of lithium-ion battery anodes comprising carbon nanofibres-comprising carbon networks according to the invention.*

| | $R_{Ohm}$ | $R_{SEI}$ | $R_{CT}$ |
|---|---|---|---|
| | [Ω] | [Ω] | [Ω] |
| **Artificial Graphite** | 35.4 | 496.5 | 596.9 |

(continued)

| | R_Ohm | R_SEI | R_CT |
|---|---|---|---|
| | [Ω] | [Ω] | [Ω] |
| **Grade B** | 25.7 | 93.9 | 344.6 |

From J. Electrochem. Sci. Technol. 2020, 11(1), 1-13,1 Woosung Choi *et al.,* quoted from J. Electrochem. Soc. 2012, 159(7), A1034, Nobohiru Ogihara *et al.*[2]:

*"the tendency of cell resistance changes at porous electrodes depends on the temperature by using four parameters: electric resistance ($R_e$), electrolyte bulk resistance ($R_{sol}$), ionic resistance in pores ($R_{ion}$), and charge transfer resistance for lithium intercalation ($R_{ct}$) in Fig. 11(a). The plots can be described as TLM for cylindrical pores for faradaic processes at all temperatures. Upon decreasing temperature, the real impedance component at 100 kHz, which determines the value of $R_{sol}$, slightly shifts toward more positive values, and the length of the 45° slope line, which reflects $R_{ion}$, increases, as shown in Fig. 11(b). This indicates that two resistances somewhat increase with decreasing temperature. However, the semicircle in the low-frequency region, which corresponds to $R_{ct}$, is significantly enlarged with decreasing temperature. It seems that the temperature dependence of $R_{ct}$ is larger than that of $R_{sol}$ or $R_{ion}$".*

$R_{ion}$ is the resistance that originates from Li-ion diffusion. The length of the slope of the Warburg component is proportional to $R_{ion}$. This is obviously easier to qualitatively compare. In the Nyquist plot (EIS data) of Figure 4, the lines for Grade A (squares) and Grade B (triangles) are shorter (lower $R_{ion}$) than the line for artificial graphite (AG, circles). Therefore, the internal resistivity of Grade B anode is lower compared to artificial graphite. Figure 4 also shows that the internal resistivity of Grade A (squares) is comparable to that of AG (circles), which indicates a superior Li-ion diffusivity in carbon networks.

The Li-ion diffusivity can be quantified using the following formula:[1,3]

$$D_{Li+} = \frac{1}{2}\left[\left(\frac{V_M}{SF\sigma}\right) \times \left(\frac{\partial E}{\partial x}\right)\right]^2$$

Where,

$V_M$     mole volume of active material

$F$     Faraday constant

$S$     electrode/electrolyte contact area

$\sigma$     the slope of $Z_{img}$ vs. $1/\sqrt{2}\,\pi f$

$$\frac{\partial E}{\partial x}$$

     the slope of charge/discharge curves

This formula demonstrates that the Li-ion diffusivity is larger (faster diffusion, which is desirable in a battery), when $\sigma$ is smaller, when the other quantities are the same.

The slope of $Z_{img}$ (i.e. the straight line in Figure 4) should become less steep. As can be seen at the EIS data of Figure 4, the slope of artificial graphite (AG, circles) is more steep than that of Grade B (triangles), which indicates a superior Li-ion diffusivity in the carbon networks of Grade B. Grade A (squares) presents a comparable Li-ion diffusivity to that of AG (circles), which indicates a superior Li-ion diffusivity in carbon networks.

d) Charge/Discharge rate: Cyclability at different C-rates

*Table 6: lithium-ion battery anodes for experiment on cyclability at different C-rates.*

| Sample | Carbon loading | Binder content | Doctor Blade Height |
|---|---|---|---|
| | [mg] | [wt.%] | [micron] |
| Grade A | 1.07 | 9.02 | 50 |
| Grade B | 2.28 | 9.09 | 10 |
| Artificial Graphite | 7.89 | 9.09 | 20 |

(continued)

| Sample | Carbon loading | Binder content | Doctor Blade Height |
|---|---|---|---|
| | [mg] | [wt.%] | [micron] |
| Grade C | 0.87 | 9.15 | 100 |
| Grade D | 1.06 | 9.10 | 50 |

The fresh half-cell was discharged at a constant discharge current of 0.5 C (discharge in ~2 hours), until the potential was dropped to 0.01 V. The half-cell was then kept at 0.01 V for 1 hour, or until the discharge current was <1% of initial discharge current. The half-cell was then left to equilibrate for 1 hour, before being charged at 0.5 C (charge in ~2 hours) to 2.0 V. The half-cell was then kept at 2.0 V for 1 hour, or until the charge current was <1% of initial charge current. This cycle was repeated 10 times. Then the discharge and charge current are changed to 1.0 C ((dis)charge in ~1 hour), which was repeated 10 times. Then the discharge and charge current are changed to 5.0 C ((dis)charge in 12 min), which was repeated 10 times. Then the discharge and charge current are changed to 10.0 C ((dis)charge in 6 min), which was repeated 10 times. Then the discharge and charge current are changed back to 0.5 C ((dis)charge in ~2 hour), which was repeated 10 times, in order to observe the decrease in capacity after these 55 cycles. For Grade C, Grade D, and AG, after the 10 cycles at 10.0 C, the discharge and charge current are changed to 20.0 C ((dis)charge in 3 min), which was repeated 10 times. Then the discharge and charge current are changed back to 0.5 C ((dis)charge in ~2 hour), which was repeated 10 times, in order to observe the decrease in capacity after these 66 cycles. It was not possible to complete the cycles with AG, because after 20.0 C the material deteriorated.

Figure 5 shows that by using Grade A (triangles), whilst the C-rate increased from 0.5 C to 10 C the capacity only decreased marginally (from 100% to 95%). Moreover, when the C-rate was reduced from 10 C to 0.5 C at the end of the sequence, the initial capacity was completely recovered (100%). This is a better behaviour than that observed for artificial graphite (AG, crosses). Grade B (circles) also presented higher capacity values than that of AG (crosses).

Figures 7 and 8 show that for Grade C (rhombuses in Figure 7) and Grade D (squares in Figure 7) the specific capacity decreased only marginally (from 100% to 90%) at 10 C and was still only marginally reduced (from 100% to 87%) even up to 20 C. When C-rate was reduced from 20 C to 0.5 C, it was still possible to recover 95-97% of the initial capacity. In contrast, with AG (crosses in Figure 7) the capacity was significantly reduced (from 100% to 71%) at 20 C. When C-rate was reduced from 20 C to 0.5 C, it was not possible to recover the initial capacity of AG (from 100% to 83%).

Figure 9 shows the Coulombic efficiency for Grade C, Grade D and AG. Discharge corresponds to lithiation process and charge corresponds to the de-lithiation process. In an half-cell, Coulombic efficiency % is calculated as follows: (charge/discharge)*100. It can be seen that Coulombic efficiency is around 100% for Grade C and Grade D in the whole cycles 0.5 C to 20 C and back to 0.5 C, while it drops to around 60% for AG at 10 - 20 C.

**Claims**

1. Use of porous, chemically interconnected, carbon nanofibers-comprising carbon networks as electrochemically active material in the anode of rechargeable lithium or sodium batteries,
   wherein the carbon nanofibers in the carbon networks are covalently bonded.

2. Use according to claim 1, wherein said carbon nanofibers-comprising carbon networks represents 10 - 100 wt%, preferably more than 10 and less than 100 wt%, of the total mass of the anode.

3. Use according to claim 1 or 2, wherein the carbon network comprises crystalline carbon-nanofibres.

4. Use according to any one of the preceding claims, wherein the average fibre length of the carbon-nanofibres is 30 - 10,000 nm.

5. Use according to any one of the preceding claims, wherein the porous carbon networks form an intraparticle porous network wherein the carbon nanofibers are interconnected to other carbon nanofibers in the network by chemical bonds via junctions, wherein the pores in the network have an intraparticle pore volume of 0.05- 5 cm$^3$/g as measured using Mercury Intrusion Porosimetry (ASTM D4404-10), and the carbon nanofibers have an average aspect ratio of fibre length-to-thickness of at least 2, preferably having a d-spacing in the range of 0.340 to 0.5 nm,
   wherein the networks preferably have a volume-based aggregate size of 0.1 - 100 $\mu$m as measured using laser diffraction (ISO 13320-1) or dynamic light scattering analysis, and/or wherein the surface area of the carbon nanofibres-comprising carbon networks as measured according to the Brunauer, Emmett and Teller (BET) method (ISO 9277:10) is preferably in the range of 15 - 300 $m^2/g$.

6. Use according to any one of the preceding claims, wherein the lithium or sodium batteries are applied in and comprised in smartphones, laptops, digital cameras and camcorders, medical and communication systems, as Uninterruptible Power Supply (UPS), as power plant energy storage and electric and/or hybrid vehicles.

7. A lithium or sodium battery anode comprising porous, chemically interconnected, carbon nanofibers-comprising carbon networks as electrochemically active material,
wherein the carbon nanofibers in the carbon networks are covalently bonded.

8. A lithium or sodium battery anode comprising porous, chemically interconnected, carbon nanofibers-comprising carbon networks representing 10 - 100 wt%, preferably more than 10 and less than 100 wt%, of the total mass of the anode, wherein the carbon nanofibers in the carbon networks are covalently bonded.

9. The lithium or sodium battery anode according to claim 7 or 8, wherein the porous carbon networks form an intraparticle porous network wherein the carbon nanofibers are interconnected to other carbon nanofibers in the network by chemical bonds via junctions, wherein the pores in the network have an intraparticle pore volume of 0.05- 5 $cm^3/g$ as measured using Mercury Intrusion Porosimetry (ASTM D4404-10), and the carbon nanofibers have an average aspect ratio of fibre length-to-thickness of at least 2, preferably having a d-spacing in the range of 0.340 to 0.5 nm,
wherein the networks preferably have a volume-based aggregate size of 0.1 - 100 $\mu$m as measured using laser diffraction (ISO 13320-1) or dynamic light scattering analysis, and/or wherein the surface area of the carbon nanofibres-comprising carbon networks as measured according to the Brunauer, Emmett and Teller (BET) method (ISO 9277:10) is preferably in the range of 15 - 300 $m^2/g$.

10. The battery anode according to claim 8 or 9, wherein the battery is a lithium battery, wherein the anode contains 0.1 - 90 wt.% of an additional active material, wherein the additional active material is graphite, silicon, a silicon-based compound, or a combination thereof.

11. The battery anode according to claim 10, wherein the additional active material is silicon, a silicon-based compound, or a combination thereof, wherein silicon, the silicon-based compound, or combination thereof are mixed with the carbon nanofibres-comprising carbon networks in the anode or the carbon nanofibres-comprising carbon networks are coated with silicon, the silicon-based compound, or combination thereof.

12. A rechargeable lithium or sodium battery comprising the anode according to any one of claims 7 - 11.

13. Use according to any one of claims 1 - 6, the lithium or sodium battery anode according to any one of claims 7 - 11 or the lithium or sodium battery according to claim 12, wherein the carbon networks are obtainable by a process for producing crystalline carbon networks in a reactor **3** which contains a reaction zone **3b** and a termination zone **3c,** by injecting a micro-emulsion of the water-in-oil, oil-in-water or bicontinuous type c, comprising metal catalyst nanoparticles, into the reaction zone **3b** which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks **e,** transferring these networks **e** to the termination zone **3c,** and quenching or stopping the formation of crystalline carbon networks in the termination zone by spraying in water **d.**

14. A battery-powered device comprising the lithium or sodium battery anode according to any one of claims 6 - 9 or the lithium or sodium battery according to claim 12, preferably a smartphone, a laptop, a power plant energy storage device or an electric or hybrid vehicle.

15. A lithium or sodium battery anode comprising porous, chemically interconnected, carbon-nanofibres comprising carbon networks as electrochemically active material representing 10 - 100 wt%, preferably more than 10 and less than 100 wt%, of the total mass of the anode.

# Fig. 1A

# Fig. 1B

# Fig. 2

# Fig. 3

Fig. 4

Fig. 5

# Fig. 6

Legend: ✕ A  ● C  ✻ AG  ＋ D

Y-axis: Specific capacity (mAh/ g carbon)
X-axis: Cycle number

# Fig. 7

Legend: ✕ AG  ◆ C  ▪ D

0.5 C    1 C    5 C    10 C    20 C    0.5 C

Y-axis: Specific capacity (mAh/ g carbon)
X-axis: Cycle number

## Fig. 8

## Fig. 9A

## Fig. 9B

## Fig. 9C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1998038685 A
- US 2021184206 A
- KR 101162588

**Non-patent literature cited in the description**

- **ROSELIN et al.** Recent Advances and Perspectives of Carbon-Based Nanostructures as Anode Materials for Li-ion Batteries. *Materials*, 2019, vol. 12, 1229
- **ZHANG Q et al.** Carbon nanomaterials used as conductive additives in lithium ion batteries. *Recent Pat Nanotechnol.*, June 2010, vol. 4 (2), 100-10
- **WANG et al.** nfluence of Conductive additives on the stability of red phosphorus-carbon anodes for sodium-ion batteries. *Scientific Reports*, 2019, vol. 9, 946
- **VINCIGUERRA et al.** Growth mechanisms in chemical vapour deposited carbon nanotubes. *Nanotechnology*, 2003, vol. 14, 655
- **; PEREZ-CABERO et al.** Growing mechanism of CNTs: a kinetic approach. *J. Catal.*, 2004, vol. 224, 197-205
- **GAVILLET et al.** Microscopic mechanisms for the catalyst assisted growth of single-wall carbon nanotubes. *Carbon.*, 2002, vol. 40, 1649-1663
- **AMELINCKX et al.** A formation mechanism for catalytically grown helix-shaped graphite nanotubes. *Science*, 1994, vol. 265, 635-639
- **DELHAES, P.** Graphite and Precursors. CRC Press., 2001
- **WOOSUNG CHOI.** From J. Electrochem.. *Sci. Technol.*, 2020, vol. 11 (1), 1-13
- **NOBOHIRU OGIHARA**. *J. Electrochem. Soc.*, 2012, vol. 159 (7), A1034